# EUROPEAN PATENT SPECIFICATION

(11) **EP 3 586 089 B1**
(45) Date of publication and mention of the grant of the patent: **02.12.2020**
(21) Application number: 18706476.1
(22) Date of filing: 16.02.2018
(51) Int. Cl.: G01D 5/20

(54) **INDUCTIVE POSITION SENSOR WITH IMPROVED MAGNETIC SHIELD AND PLUNGER CORE DESIGN**
INDUKTIVER POSITIONSSENSOR MIT VERBESSERTER MAGNETISCHER ABSCHIRMUNG UND KOLBENKERNDESIGN
CAPTEUR DE POSITION INDUCTIF À BLINDAGE MAGNÉTIQUE AMÉLIORÉ ET CONCEPTION DE NOYAU DE PLONGEUR

(30) Priority: 27.02.2017 SE 1750210
(43) Date of publication of application: 01.01.2020
(73) Proprietor: SEM AB, 662 21 Åmål (SE)
(72) Inventor: BENGTSSON, Jörgen, 662 96 Svanskog (SE)
(74) Representative: Hynell Intellectual Property AB
(86) International application number: PCT/EP2018/053889
(87) International publication number: WO 2018/153784

(56) References cited:
- EP-A1- 0 463 236
- EP-A1- 1 785 697
- EP-A2- 0 338 966
- WO-A1-85/05710
- DE-A1- 3 809 887
- US-A1- 2014 070 672

## Description

### BACKGROUND

Different kinds of position sensors have been developed and one of the most common position sensors use an inductive position sensor, comprising a coil structure surrounding a plunger core movable in relation to the coil. The coil conventionally comprises an electrical winding wound on a bobbin.
The coil when connected to an alternating voltage source produce a magnetic field and acts as a magnet, and the plunger core is made of soft magnetic material that change the inductance in the coil. The coil and associated parts forms one part of the position sensor, and the plunger core forms a second part that is movable versus the first part. Normally in a system where relative position between parts need to be controlled, the first part with the coil is stationary and the second part with the plunger core is attached with a movable part, but they may also be mounted in the opposite fashion.
The position of the movable magnetic plunger core versus the coil could be determined by measuring the inductance of the winding.
The plunger core is typically made from a soft magnetic material, preferably using iron alloys, and made as a solid rod. One disadvantage is that the cost for only the soft magnetic plunger core typically amounts to over 10%, often about 15%, of the total costs of the sensor (including coil winding and housing).

Several proposals have been presented to reduce costs in this kind of inductive position sensor, and some use electrical steel in the solid plunger core instead of iron plunger cores.
Electrical steel is often manufactured in cold-rolled strips. These strips are cut to shape to make laminations which are stacked together to form the laminated solid cores of transformers, and the stator and rotor of electric motors.
The cost issue is a very important issue for these inductive position sensors as they are used in large numbers in different systems such as automotive vehicle systems, detecting position of gearbox actuators and other equipment of the automotive vehicle.

Using electrical steel as parts of the sensor radically lowers the costs as electrical steel produced in strips is manufactured in huge volumes and at low cost per kg.

In US5204621, *"Position sensor employing a soft magnetic core",* an inductive position sensor is disclosed using a solid movable plunger core with a specific design, but where the stationary part of the coil core is supported by a coil core made of soft iron sheet material, which is an alternative denomination for electrical steel. However, this usage of electrical steel has conventionally been used in the coil winding part.

In DE102010002505, *"Induktiver Kraftfahrzeugsensor und Verwendung desselben"",* an inductive position sensor is disclosed, where one embodiment discloses a solid plunger core made from electrical steel ("Transformatorblech" in German) integrated in a push rod surrounding the plunger core.

In DE102014219009, *"Positionssensor",* another inductive position sensor is disclosed, where the movable plunger core is flat in an otherwise flat sensor structure In US2427866, is a position sensor disclosed where the movable plunger core is made as a hollow core in suitable magnetic material mounted connected to a Bakelite guide stem by press fit. However, the hollow plunger core is self-supporting in the area outside of the press fit area and do not enable a foil design per se. This design also discloses a slotted sleeve as a magnetic shield but lack any shielding in the axial direction.

DE3507585 disclose another movable plunger core shaped to cylindrical design, made from magnetic strip material having a thickness of 0,5 mm, in a cylindrical form with a small inner diameter of about 2,7 mm. This is also a self-supporting plunger core not enabling a foil design.

GB2040470 also disclose another movable plunger core shaped to a tubular structure, made from magnetic strip material which also is a self-supporting plunger core.

Above examples disclose that the cost reduction objective is very important for these position sensors and several solutions have been proposed to reduce total costs for the sensor. As a large amount of position sensors are installed in a single vehicle it becomes clear that even a small cost reduction is sought for. EP0463236 discloses a further known movable plunger core with a shield made of silicon steel.

### THE INVENTION

The invention is related to a new design in an inductive position sensor enabling a further cost reduction of the sensor wherein preferably the magnetic shield as well as the movable magnetic plunger core are made from electrical steel, or soft iron sheet material shaped in a hollow circular form. The common inventive objective is to reduce the cost, e.g. by enabling a cost efficient and reliable design using at least partly soft magnetic material, by reducing the amount of more expensive soft magnetic material used in the inductive position sensor, reducing also waste of such soft magnetic material during manufacturing of said inductive position sensor.

The definition of electrical steel (from Wikipedia) stands for a special steel tailored to produce specific magnetic properties: small hysteresis area resulting in low power loss per cycle, low core loss, and high permeability. Electrical steel is usually manufactured in cold-rolled strips less than 2 mm thick. These strips are cut to shape to make laminations which are stacked together to form the laminated solid cores of transformers, and the stator and rotor of electric motors. Laminations may be cut to their finished shape by a punch and die or, in smaller quantities, may be cut by a laser, or by wire EDM. Soft magnetic alloys are ferromagnetic materials that are easily magnetized and de-magnetized. To provide optimal magnetic performance, these alloys possess very low levels of carbon, nitrogen, and oxygen. They rely on various additions of phosphorus, nickel, and silicon to optimize magnetic induction, permeability, and coercive force. The magnetic properties of all of these alloys benefit from high temperature sintering above 1200 C in hydrogen. Density and grain size increases, while residual levels of carbon, oxygen, and nitrogen are reduced. Typical applications include relays, cores, sensor probes, armatures, solenoid components, and pole pieces.

The inventive induction position sensor uses electrical steel as the outer shielding screen enclosing the coil winding.

Hence, in the preferred embodiment of the inductive position sensor a thin walled soft magnetic tubular shield surrounds the cylindrical coil winding, wherein said thin walled soft magnetic shield has a first tubular part shaped to circular cross-section form having an inner diameter and with an longitudinal abutting seam running in parallel to the longitudinal direction of the cylindrical coil winding, and shaped to the circular cross-section form from a flat cold-rolled strip cut to a rectangle, and wherein the thin walled soft magnetic shield has a cylindrical cross section. The shield is closed in at least one gable end by an additional shield hole washer element having an outer diameter and located inside of the first tubular part, and wherein both the soft magnetic tubular shield and the shield hole washer element are made from flat strips of electrical steel. By this 2-part form may the shielded housing be manufactured at low cost with minimum waste of expensive soft magnetic material with the shield hole washer element clamped inside of the rolled first tubular part.

The inventors have also surprisingly realized that the inventive design of the inductive position sensor use the skin-effect of the movable magnetic plunger core, and the prior art design with solid movable plunger cores is not necessary to change the inductance of the coil winding to a sufficient extent. The plunger core may preferably be made very thin material, e.g. less than 0,5 mm thickness and preferably as a foil mounted on a supporting plunger core, e.g. made in any low cost polymer, metal or Bakelite. Skin-effect is the tendency of an alternating electric current (AC) to become distributed within a conductor such that the current density is largest near the surface of the conductor, and decreases with greater depths in the conductor. As of magnetic fields the strength of the magnetic field is strongest at the surface of the plunger core, and decreases with greater depths in the plunger core. i.e. the magnetic field is concentrated at the very outer surface of the plunger core.
Hence, the movable magnetic plunger core, changing the inductance of the winding, needs not to be solid. Instead, for the greatest impact per kg of plunger core material, the outer surface of the plunger core should be maximized while minimizing the amount of material used. This outer surface of the plunger core is in this context referred to as the active part of the soft magnetic plunger core, as it interacts with the magnetic field and changes the inductance of the coil winding. The remaining part of the movable plunger core is referred to as the inactive part of the soft magnetic plunger core.
The inventive inductive position sensor besides the outer shield housing preferably also comprises;
a soft magnetic plunger core shaped to a hollow cross-section form, wherein the thickness of the wall of the soft magnetic plunger core is between 0,02-5% of the total outer diameter of the soft magnetic plunger core. Preferably is the thickness of the wall of the soft magnetic plunger core between 0,01 - 0,4 mm.

The hollow cross-section of the soft magnetic plunger core may preferably by a circular cross section, but may also be oval, triangular, square, pentagonal or have more than 5 sides.

With this basic design, the cost for the plunger core can be reduced to less than 10% of the cost for a solid iron plunger core conventionally used. In a typical position sensor, could a solid Ni-Fe iron plunger core cost about 0:60 Euro, and the cost for a hollow plunger core in electrical steel could cost only about 0:04 Euro.

In yet a preferred embodiment the wall of the soft magnetic plunger core may even be mounted as a foil on top of a central inactive core element made of nonmagnetic material. The foil may alternatively be applied as a surface coating with soft magnetic properties by using sputtering or dip-painting techniques.

The invention also relates to the plunger and the magnetic shield as such, both used for the above described inductive position sensor. This may provide for a producer to reduce number of materials used in the sensor and allows purchasing larger bulk volumes of the inexpensive electrical steel strips used for multiple parts in the sensor.

The above listed objectives mainly focus upon cost reduction producing inductive position sensors, while the design does not result in less accuracy in detecting the position.

### LIST OF FIGURES

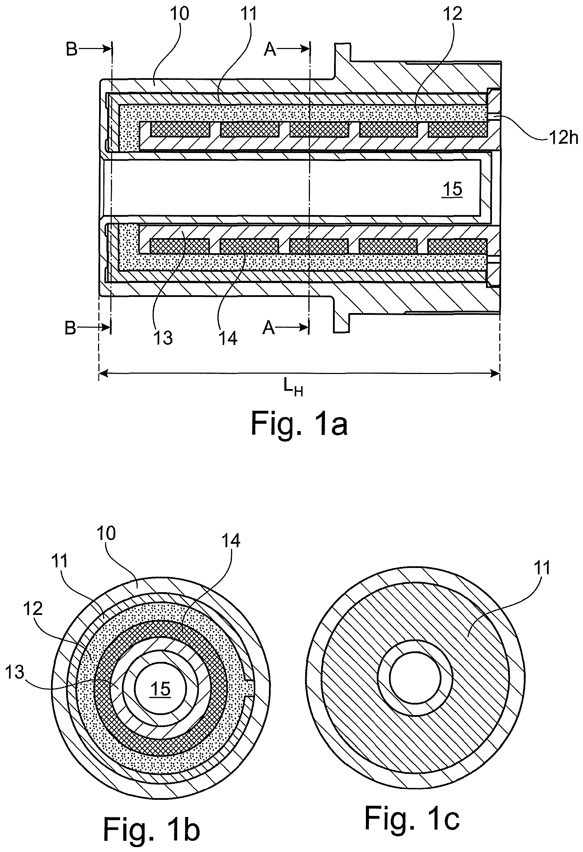

The invention will be described using following figures, where
Fig. 1a show a longitudinal cross section of the coil winding housing, without a movable plunger core;
Fig. 1b show a cross section of the coil winding housing seen in the view A-A in figure 1a;
Fig. 1a show a cross section of the coil winding shield seen in the view B-B in figure 1a;
Fig 2 show a cross section of the coil winding housing, with a movable plunger core;
Fig 3 show a cross section of a conventional movable plunger core of conventional design as a solid body;
Fig 4a shows in a perspective view the plunger core;
Fig 4b shows in a side view the plunger core;
Fig 4c shows in an end view the plunger core;
Fig 5a shows in a perspective view the flat plate used to form the plunger core;
Fig 5b shows in a side view the plunger core after rolling the flat plate to tubular form;
Fig 5c shows in an end view the plunger core as shown in Fig. 5b;
Fig 6 show in an end view an alternative embodiment of the plunger core; and;
Fig 7 show in an end view the inventive shield 11a in a similar end view.
Fig 8a show the tubular shield part alone;
Fig.8b show the shield hole washer alone;
Fig. 8c show the housing alone;
Fig 9a to 9c show the mounting sequence of the shield members into the housing;
Fig. 10 show a end view of the housing alone;
Fig. 11 show a detail view of the interaction between shield elements when mounted in the housing.

### DESCRIPTION OF PREFERED EMBODIMENT

In Fig. 1a is shown a longitudinal cross section of the coil winding housing, without a movable plunger core. And in Fig. 1b is seen a cross section of the coil winding housing seen in the view A-A, and in Fig.1c is seen a cross section of the magnetic shield seen in the view B-B.

The coil winding housing comprises an electrical winding 14 wound on an elongated electrical winding support 13 which may be equipped with winding chambers as seen in figure 1a. The turns of the coil winding are wound in an orthogonal plane crossing the longitudinal axis of the coil winding housing, and the length of the coil winding in the longitudinal direction is at least as long as the stroke of the motion to be detected (i.e. the stroke length of the plunger core later described). The total length of the coil winding housing is indicated with L_{H}, i.e. slightly longer than the length of the coil winding.

The winding is encapsulated in some insulation material 12, which may be oil or resin that may be injected through a filler injection hole 12h (in figure 1a plugged).

A magnetic shield is surrounding the coil winding. The magnetic shield is made from electrical steel. In the figure is the magnetic shield made in a cup formed piece 11, with an outer thin walled plate part formed as a tube and with one gable end closed by a bottom part. The outer thin walled soft magnetic shield 11 with its bottom part may be shaped to a cup form by pressing to the cup shape form from a flat cold-rolled strip cut to a rectangle. One gable end, from which end the plunger core is extending, is closed by the bottom part. The magnetic field will thus be enclosed by the cup shaped shield. The shield is then preferably totally encapsulated by a sturdy polymeric material that forms the outer skin of the coil winding housing. The outer skin also covers the inner surface of the cylindrical hole 15, and therefore is a polymeric material with low friction preferably used. As shown in Fig. 1a complementary flanges can be arranged in this outer skin for mounting the inductive sensor in a correct position. In the center of the coil winding is formed a recess in form of a cylindrical hole 15, which is used as the guide for the plunger core later to be described.

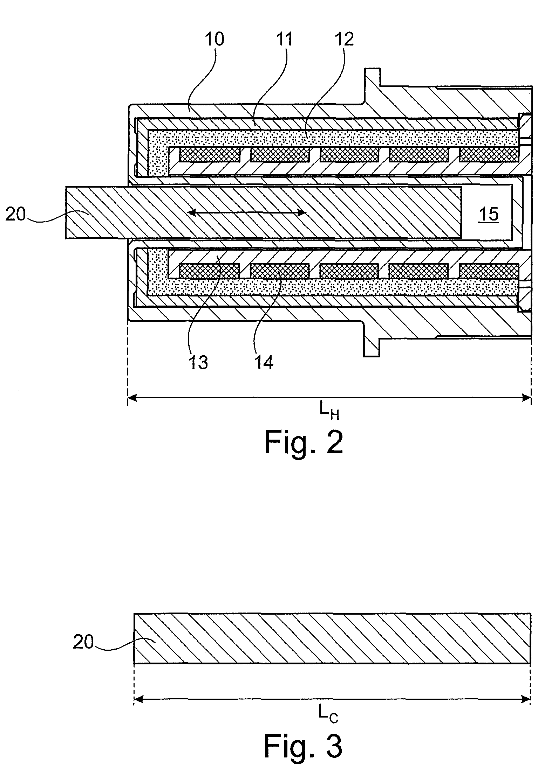

Figure 2 is the same view as in Fig.2, but here with a movable plunger core 20 installed. The stroke direction of the movable plunger core 20 is indicated by a double headed arrow, i.e. the plunger core 20 may be moved out or into the cylindrical hole 15 of the coil winding housing. And as indicated earlier, any part of the plunger core or the coil winding housing could be the part that is stationary. The conventional plunger core is made in iron alloy as a solid rod. The plunger core 20 is shown separate in Fig.3 having an longitudinal length of LC, which typically is 5-15 mm longer than the longitudinal length of the coil winding 14, allowing fastening members to be attached to the protruding end.

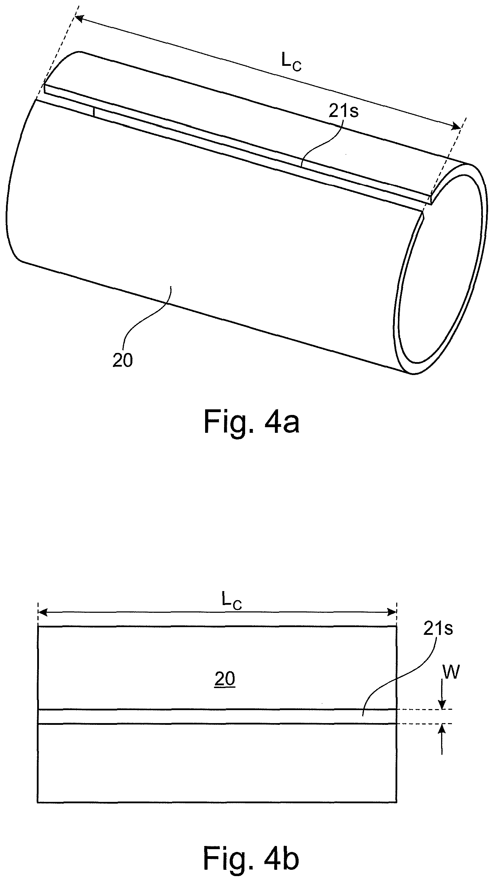

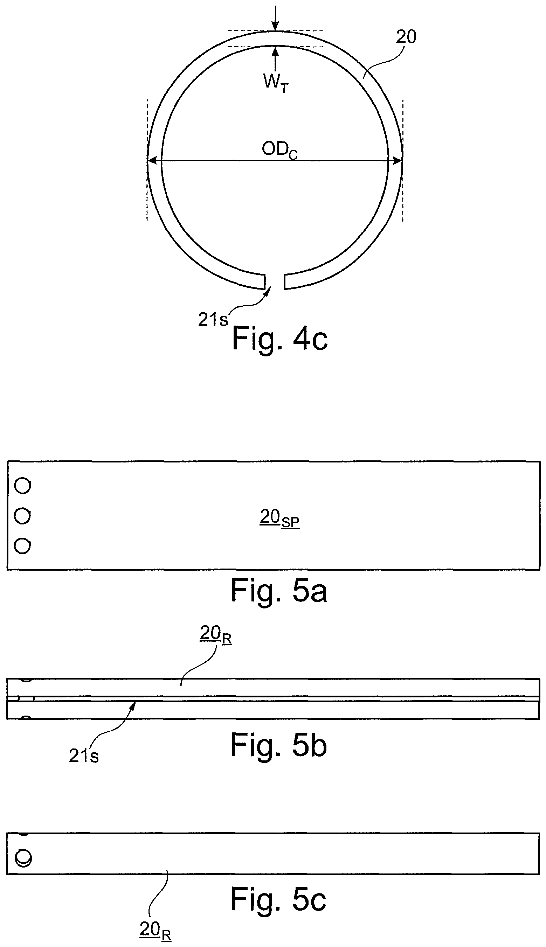

The plunger core 20 is shown in a perspective view in Fig 4a, and in Figure 4b in strict side view, and in Fig.4c in an end view. The soft magnetic plunger core 20 has in this embodiment a hollow and circular cross-section and is made from electrical steel or soft iron sheet material. The plunger core 20 is shaped to a hollow circular cross-section form with a longitudinal abutting seam 21s running in parallel to the longitudinal direction of the cylindrical coil winding 14. The seam 21s may have a gap W between the abutting edges of the plunger core, but it may also be closed with soldering/welding. However, as the seam runs in the longitudinal direction of the coil winding it would not interfere with the magnetic field.
As illustrated in Fig.5a to 5c, could the plunger core 20 be manufactured from a flat cold rolled strip cut to a rectangle 20_{SP}, as seen in Fig.5a, and shaped to the hollow circular cross-section form 20_{R}, as seen in Fig 5b and 5c. The thickness of the wall W_{T} of the plunger core 20 is less than 25% but more than 0,01% of the total outer diameter ODc of the plunger core 20.
Preferably is the thickness of the wall W_{T} of the plunger core 20 between 0,02-5% of the total outer diameter OD_{C} of the plunger core 20. The actual thickness of the wall of the soft magnetic plunger core may preferably lie between 0,01 - 0,3 mm.

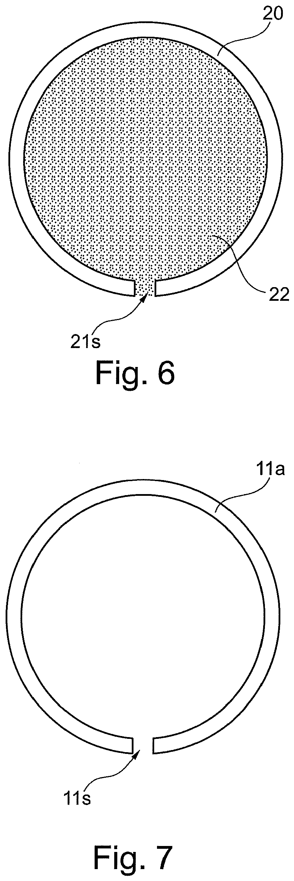

An alternative embodiment of the plunger core is shown in an end view in Fig 6. Here the wall of the soft magnetic plunger core 20 is mounted as a thin foil on top of a central core element 22 made of a filler material different from electrical steel. The core element 22 may preferably have the same total length as the total length of the plunger core, thus supporting the thin foil attached to the outer surface of the core element 22. The filler may be a resin or any polymeric blend, resulting in high structural rigidity of the plunger core even if the soft magnetic material is mounted as a thin foil on the surface of the central core element 22. The foil may be glued to the surface of the central core element 22 or cured together with the filler during curing of the filler. This foil design of the plunger is inventive per se as no prior art has used a thin foil with a thickness between 0,02-5% of the total outer diameter OD_{C} of the plunger core 20, and this may be a further cost reduction design to be considered when low cost soft magnetic foils becomes available.

In Fig 7 is also shown in an end view the inventive shield 11a in a similar end view. The same principles of manufacturing apply to the shield as the plunger core, besides resulting in a larger outer diameter. With the same manufacturing process for both the plunger core and the shield could production costs be reduced, as the same type of rolling machine may be used and the same electrical steel or soft iron sheet material may be used and delivered to the work shop in rolls, keeping number of components down.

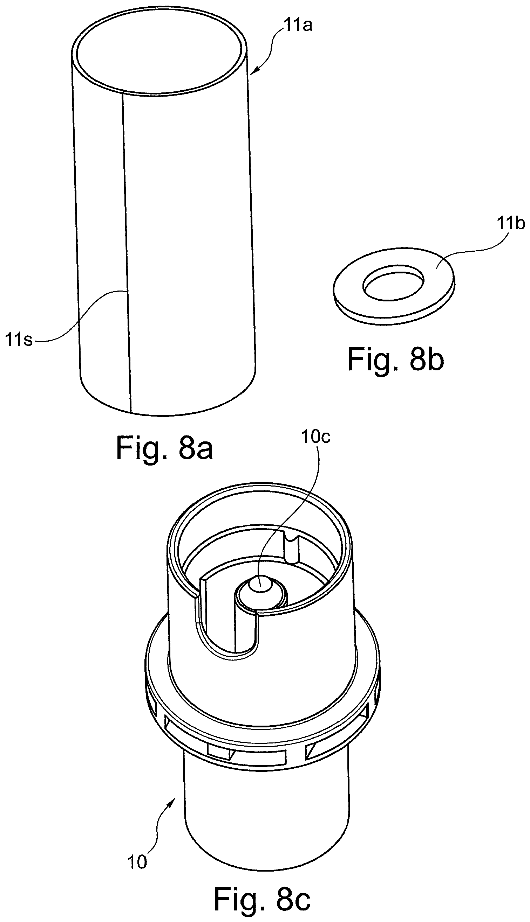

In Figures 8a to 8c are shown the three main components that form the shielded housing, i.e. the magnetic shield made in 2 pieces, an outer thin walled tubular part 11a and with one gable end closed by a shield hole washer 11b. The tubular part 11a and the shield hole washer 11b to be mounted in the housing 10. The entire housing is shown alone in figure 8c with a central pillar member 10c that provides for the hole 15 where the plunger is displaceable, and that centers the shield hole washer 11b.

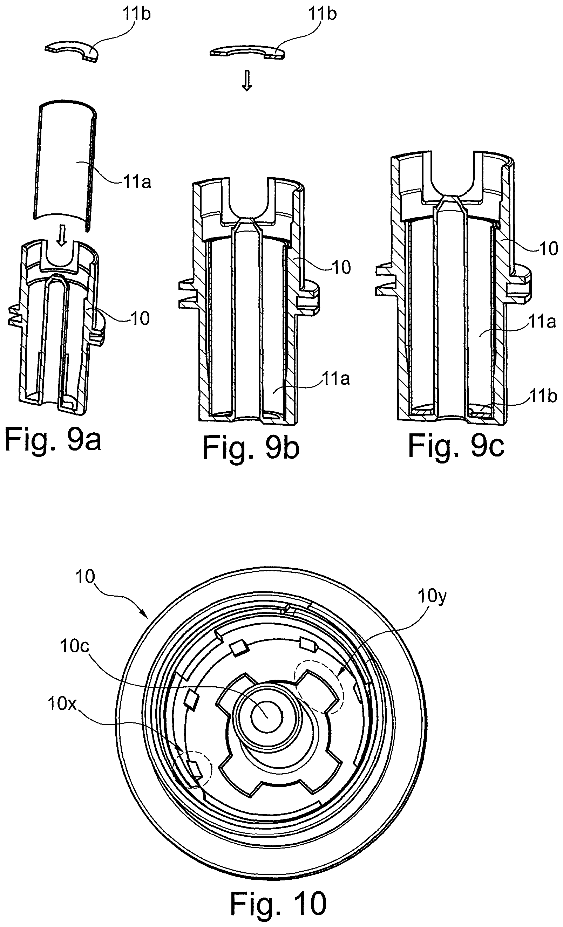

Figure 9a show the three main components of the inventive shielded housing in an exploded view, with the housing 10, the tubular shield part 11a and the shield hole washer 11b stacked in top of each other. As indicated in Fig. 9a by the arrow is first the tubular shield part 11a pressed downwardly into the housing 10. Figure 9b show the tubular shield part in its final position in the housing 10. As indicated in Fig. 9b by the arrow is the shield hole washer 11b thereafter pressed downwardly into the tubular shield part 11a and the housing 10, reaching the final position as shown in Figure 9c. Figure 10 show the housing 10 alone, and this housing is equipped with integral beveled notches 10x arranged evenly around the inner circumference of the housing, in this embodiment with 8 beveled notches. These beveled notches will compress the tubular shield part 11a radially inwardly decreasing the gap 11s. There are also ridges 10y in the bottom of the housing supporting the shield hole washer in its final position.

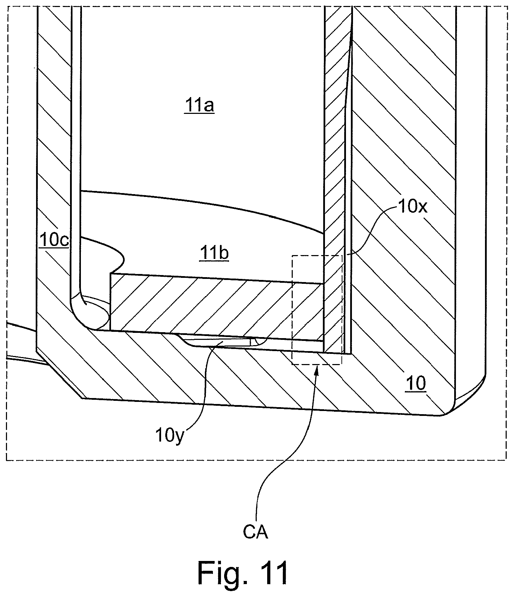

In figure 11 is disclosed a detail embodiment of the co-action between the tubular shield part 11a and the shield hole washer 11b. As the beveled notches 10x press the tubular shield part radially inwardly will a contact force be developed against the outer periphery of the shield hole washer 11b. In order to provide for best shielding effect is the thickness of the shield hole washer larger than the thickness of the tubular shield part, increasing the contact surface therebetween. As indicated in figure 11 should the thickness of the shield hole washer be about 2 times larger than the thickness of the tubular shield part, and preferably such that the thickness of the shield hole washer element 11b has a relative thickness versus the thin walled soft magnetic tubular shield 11a in the range 1,5 to 5 times.

The invention may be modified in several ways beside the embodiment shown. This applies to the type of electrical coil winding and structure of the coil bobbin.

The essential features are that the coil shield surrounding the coil is made from a rolled soft magnetic plate material, that is a standard product made in large volumes and hence obtainable at low cost, and that the gable end of the shield is made from a hole washer made from similar soft magnetic material.

This inventive design of the shielded housing may preferably also be combined with a plunger core made in similar fashion from soft magnetic plate material, i.e the plunger core that changes the inductance in the electrical coil winding use a hollow rod made from electrical steel that use a large outer surface of the plunger core as inductance changing member, and in a preferred embodiment use the same type of design of the shield also made in electrical steel. It is foreseen that the plunger core design may be the subject of protection on its own, i.e. without any limitation regarding the shield, e.g. by means of a divisional application.

Even if the active part of the plunger core and the thin walled soft magnetic shield is shaped to circular cross-section form with a longitudinal abutting seam running in parallel to the longitudinal direction of the cylindrical coil winding, could the seam also be running obliquely versus the longitudinal direction of the cylindrical coil winding. This especially if the seam is fused together.

## Claims

1. An inductive position sensor, comprising: a first part with a cylindrical coil winding (14) having a longitudinal direction, a second part with a soft magnetic plunger core (20) arranged movable with respect to the cylindrical coil winding (14) in the longitudinal direction and said soft magnetic plunger core having a longitudinal extent parallel to the longitudinal direction of the cylindrical coil winding, and wherein the first part at least partly surrounds the soft magnetic plunger core, ***characterized in that*** a thin walled soft magnetic tubular shield (11a) surrounds the cylindrical coil winding (14), wherein said thin walled soft magnetic shield (11a) is shaped to circular cross-section form with an longitudinal abutting seam (11s) running in parallel to the longitudinal direction of the cylindrical coil winding, and shaped to the circular cross-section form from a flat strip cut to a rectangle and wherein the thin walled soft magnetic shield (11a) has a cylindrical cross section with one gable end closed by a shield hole washer element (11b), and wherein both the soft magnetic tubular shield (11a) and the shield hole washer element (11b) are made from flat strips of electrical steel.

2. An inductive position sensor according to claim 1, wherein the thin walled soft magnetic tubular shield (11a) is arranged inside of a tubular housing made in polymeric material, with beveled notches integrated with the housing and arranged circumferentially around an end of the thin walled soft magnetic tubular shield (11a) pressing the thin walled soft magnetic tubular shield (11a) such that the gap of the longitudinal abutting seam (11s) is reduced.

3. An inductive position sensor according to claim 1, wherein the thickness of the shield hole washer element (11b) has a relative thickness versus the thin walled soft magnetic tubular shield (11a) in the range 1,5 to 5 times.

4. An inductive position sensor according to claim 2, wherein the tubular housing made in polymeric material includes a central guide tube for the soft magnetic plunger core (20).

5. An inductive position sensor according to claim 1, wherein the soft magnetic plunger core (20) is shaped to a hollow cross-section form with an longitudinal abutting seam (21s) running in parallel to the longitudinal direction of the cylindrical coil winding (14), and shaped to the hollow circular cross-section form (20_{R}) from a flat cold rolled strip of electrical steel cut to a rectangle (20_{SP}).

6. An inductive position sensor according to claim 5, wherein the longitudinal abutting seam (21s) of the soft magnetic plunger core (20) is fused together.

7. An inductive position sensor according to claim 5, wherein the thickness of the wall (W_{T}) of the soft magnetic plunger core (20) is between 0,02-5% of the total outer diameter (OD_{C}) of the soft magnetic plunger core.

8. An inductive position sensor according to claim 7, wherein the thickness of the wall (W_{T}) of the soft magnetic plunger core (20) is between 0,01 - 0,4 mm.

9. An inductive position sensor according to claim 8, wherein the wall of the soft magnetic plunger core (20) is mounted as a foil on top of a central inactive core element (22) made of nonmagnetic material.

## Patentansprüche

1. Induktiver Positionssensor, umfassend: einen ersten Teil mit einer zylindrischen Spulenwicklung (14), welche eine Längsrichtung aufweist, einen zweiten Teil mit einem weichen magnetischen Kolbenkern (20), welcher in Bezug auf die zylindrische Spulenwicklung (14) in der Längsrichtung bewegbar ist, und wobei der weiche magnetische Kolbenkern eine Längserstreckung parallel zu der Längsrichtung der zylindrischen Spulenwicklung aufweist, und wobei der erste Teil den weichen magnetischen Kolbenkern zumindest teilweise umgibt, **dadurch gekennzeichnet, dass** eine dünnwandige weiche magnetische röhrenförmige Abschirmung (11a) die zylindrische Spulenwicklung (14) umgibt, wobei die dünnwandige weiche magnetische Abschirmung (11a) zu einer kreisförmigen Querschnittform mit einer Längsanlagenaht (11s) geformt ist, welche parallel zu der Längsrichtung der zylindrischen Spulenwicklung verläuft, und zu der kreisförmigen Querschnittsform aus einem flachen Streifen, welcher zu einem Rechteck geschnitten ist, geformt ist, und wobei die dünnwandige weiche magnetische Abschirmung (11a) einen zylindrischen Querschnitt mit einem Giebelende aufweist, welches durch ein Abschirmungslochunterlegscheibenelement (11b) geschlossen ist, und wobei sowohl die weiche magnetische rohrförmige Abschirmung (11a) als auch das Abschirmungslochunterlegscheibenelement (11b) aus flachen Streifen aus elektrischem Stahl hergestellt sind.

2. Induktiver Positionssensor nach Anspruch 1, wobei die dünnwandige weiche magnetische rohrförmige Abschirmung (11a) im Inneren eines röhrenförmigen Gehäuse aus Polymermaterial angeordnet ist, wobei abgeschrägte Kerben in dem Gehäuse integriert und um ein Ende der dünnwandigen weichen magnetischen röhrenförmigen Abschirmung (11a) umlaufend angeordnet sind, wobei sie die dünnwandige weiche magnetische röhrenförmige Abschirmung (11a) derart drücken, dass der Spalt der Längsanlagenaht (11s) reduziert ist.

3. Induktiver Positionssensor nach Anspruch 1, wobei die Dicke des Abschirmungslochunterlegscheibenelements (11b) relativ zu der Dicke der dünnwandigen weichen magnetischen röhrenförmigen Abschirmung (11a) in dem Bereich von 1,5 bis 5 Mal dicker ist.

4. Induktiver Positionssensor nach Anspruch 2, wobei das röhrenförmige Gehäuse aus Polymermaterial eine mittige Führungsröhre für den weichen magnetischen Kolbenkern (20) aufweist.

5. Induktiver Positionssensor nach Anspruch 1, wobei der weiche magnetische Kolbenkern (20) zu einer hohlen Querschnittsform mit einer Längsanlagenaht (21s) geformt ist, welche parallel zu der Längsrichtung der zylindrischen Spulenwicklung (14) verläuft, und zu der hohlen kreisförmigen Querschnittsform (20_{R}) aus einem flachen kalten gewalzten Streifen aus elektrischem Stahl, welcher zu einem Rechteck (20_{SP}) geschnitten ist, geformt ist.

6. Induktiver Positionssensor nach Anspruch 5, wobei die Längsanlagenaht (21s) des weichen magnetischen Kolbenkerns (20) verschmolzen ist.

7. Induktiver Positionssensor nach Anspruch 5, wobei die Dicke der Wand (Wₜ) des weichen magnetischen Kolbenkerns (20) zwischen 0,02-5% des Gesamtaußendurchmessers (OD_{C}) des weichen magnetischen Kolbenkerns liegt.

8. Induktiver Positionssensor nach Anspruch 7, wobei die Dicke der Wand (Wₜ) des weichen magnetischen Kolbenkerns (20) zwischen 0,01 - 0,4 mm liegt.

9. Induktiver Positionssensor nach Anspruch 8, wobei die Wand des weichen magnetischen Kolbenkerns (20) als Folie oben auf ein mittiges inaktives Kernelement (22) aus einem nicht magnetischen Material montiert ist.

## Revendications

1. Un capteur de position inductif, comprenant : une première partie avec un enroulement de bobine cylindrique (14) ayant une direction longitudinale, une deuxième partie avec un noyau de plongeur magnétique souple (20) agencé de façon à être mobile par rapport à l'enroulement de bobine cylindrique (14) dans la direction longitudinale, et ledit noyau de piston magnétique souple ayant une extension longitudinale parallèle à la direction longitudinale de l'enroulement de bobine cylindrique, et dans lequel la première partie entoure au moins partiellement le noyau de plongeur magnétique souple, **caractérisé en ce qu'**un blindage tubulaire magnétique souple (11a) à paroi mince entoure l'enroulement de bobine cylindrique (14), ledit blindage magnétique souple (11a) à paroi mince étant mis en forme selon une section transversale circulaire avec une jointure longitudinale par butée (11s) s'étendant parallèlement à la direction longitudinale de l'enroulement de bobine cylindrique, et mis en forme selon une section transversale circulaire à partir d'une bande plate coupée en rectangle, le blindage magnétique souple (11a) à paroi mince ayant une section transversale cylindrique avec une extrémité en pignon fermée par un élément en rondelle (11b) de trou de blindage, et le blindage tubulaire magnétique souple (11a) et l'élément en rondelle (11b) de trou de blindage étant tous les deux constitués de bandes plates d'acier électrique.

2. Un capteur de position inductif selon la revendication 1, dans lequel le blindage tubulaire magnétique souple (11a) à paroi mince est agencé à l'intérieur d'un boîtier tubulaire fait en matériau polymère, avec des encoches biseautées intégrées au boîtier et agencées circonférentiellement autour d'une extrémité du blindage tubulaire magnétique souple (11a) à paroi mince, qui pressent le blindage tubulaire magnétique souple (11a) à paroi mince de telle sorte que l'espace de la jointure longitudinale par butée (11s) est réduit.

3. Un capteur de position inductif selon la revendication 1, dans lequel l'épaisseur de l'élément en rondelle (11b) de trou de blindage a une épaisseur relative par rapport au blindage tubulaire magnétique souple (11a) à paroi mince, située dans une gamme allant de 1,5 à 5 fois.

4. Un capteur de position inductif selon la revendication 2, dans lequel le boîtier tubulaire réalisé en matériau polymère comprend un tube de guidage central pour le noyau de plongeur magnétique souple (20).

5. Un capteur de position inductif selon la revendication 1, dans lequel le noyau de plongeur magnétique souple (20) est formé selon une section transversale creuse avec une jointure longitudinale par butée (21s) s'étendant parallèlement à la direction longitudinale de l'enroulement de bobine cylindrique (14), et est formé selon la forme en section transversale circulaire creuse (20r) à partir d'une bande plate d'acier électrique laminée à froid, coupée en un rectangle (20sp).

6. Un capteur de position inductif selon la revendication 5, dans lequel la jointure longitudinale par butée (21s) du noyau de plongeur magnétique souple (20) est fusionnée ensemble.

7. Un capteur de position inductif selon la revendication 5, dans lequel l'épaisseur de la paroi (Wt) du noyau de plongeur magnétique souple (20) est comprise entre 0,02 et 5% du diamètre extérieur total (ODc) du noyau de plongeur magnétique souple.

8. Un capteur de position inductif selon la revendication 7, dans lequel l'épaisseur de la paroi (Wt) du noyau de plongeur magnétique souple (20) est comprise entre 0,01 et 0,4 mm.

9. Un capteur de position inductif selon la revendication 8, dans lequel la paroi du noyau de plongeur magnétique souple (20) est montée sous la forme d'une feuille sur le dessus d'un élément de noyau central (22) inactif fait en un matériau non magnétique.
